# EUROPEAN PATENT SPECIFICATION

(11) **EP 1 798 907 B1**
(45) Date of publication and mention of the grant of the patent: **04.04.2012**
(21) Application number: 06125789.5
(22) Date of filing: 11.12.2006
(51) Int. Cl.: H04L 12/46, A01G 25/16

(54) **Centralised irrigation automation system for a building provided with local computer network with standard network protocol**
Zentrales Automatisierungssystem für die Bewässerung eines Gebäudes ausgestattet mit lokalem Rechnernetz mit standardmässigem Datenübertragungsprotokoll
Système centralisé automatisé d'irrigation pour un bâtiment équipé d'un réseau informatique local avec un protocole de réseau standard

(30) Priority: 15.12.2005 IT MI20052388
(43) Date of publication of application: 20.06.2007
(73) Proprietor: CLABER S.P.A., I-33080 Fiume Veneto Pordenone (IT)
(72) Inventor: Battistuto, Roberto, 31100, UDINE (IT); Brundisini, Andrea, 40137, BOLOGNA (IT); Del Cont Bernard, Stefano, 33081, AVIANO (PN) (IT); Milan, Franco, 33070, CANEVA (PN) (IT)
(74) Representative: Mittler, Enrico

(56) References cited:
- WO-A-99/39567
- JP-A- 2004 173 583
- US-A1- 2004 218 591

## Description

The present invention relates to a centralised irrigation automation system for irrigable fields, such as for example gardens, parks, etc, which is associable with a pre-existing building automation system in a so-called "building automation" context.

Normally, irrigation automation systems for irrigable spaces of buildings of various types (hotels, shopping malls, company headquarters, etc) operate on transmission supports (standard electric networks) and with proprietary data-exchange protocols (network dialogue modes), i.e. provided expressly and independently for other systems.

The object of the present invention is to provide a centralised automation system for irrigation systems of buildings provided with a local computer network with a standard network protocol, that is able to operate on the same transmission supports and with the same standard protocols with which the building is already provided, thus being able to live and operate together with other automation systems that are part of the life of the building and are in perfect harmony therewith.

JP-A-2004173583 discloses a water spray system comprising a universal personal computer giving orders to water spray valves controlled by water spray controllers on order from the personal computer. Each of the water spray controllers is LAN connected to the personal computer.

According to the invention, this object is achieved with a centralised irrigation automation system as defined in claim 1.

In this way, the irrigation automation system according to the present invention can use transmission supports and operate with standard protocols that are already present in the building, operating together with the same language and in harmony with other pre-existing automation systems.

If, as is usual, the local network (LAN) of the building is Ethernet with TCP/IP protocol (Transmission Control Protocol / Internet Protocol), the automation system can also be seen and managed through Internet by using a standard browser.

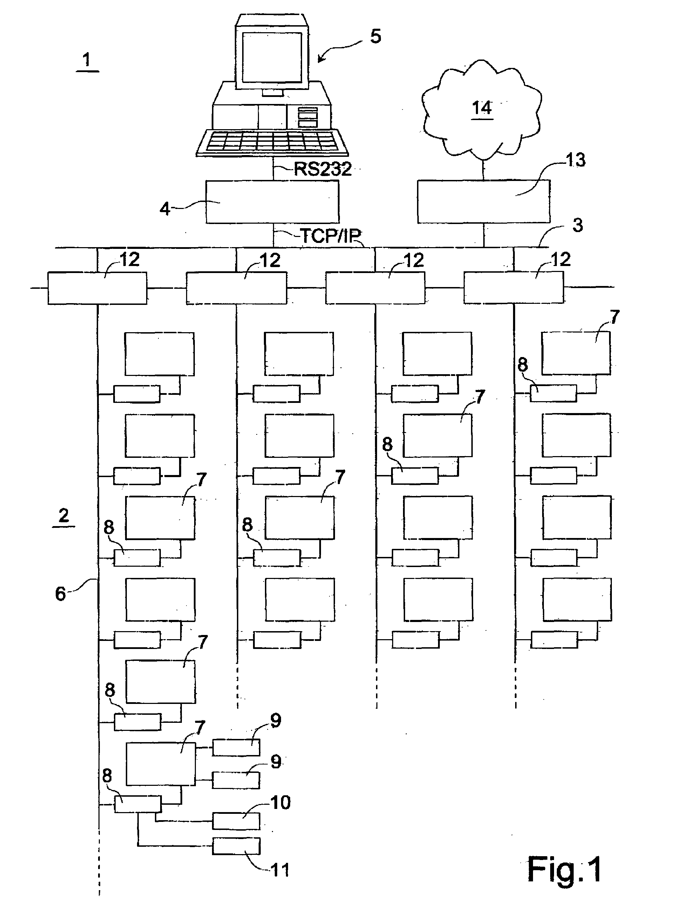

The features of the present invention will become clearer from the following detailed description of a practical embodiment thereof illustrated by way ofnon-limiting example in the enclosed drawing.

The drawing shows schematically a centralised irrigation automation system for a building (indicated by 1) that has an irrigable field (indicated by 2) with several sectors and is provided with a local computer network Ethernet 3 with a standard TCP/IP network protocol.

Within the building there is provided a field control unit 4 that is capable of receiving, storing and issuing irrigation commands.

According to the invention, the field control unit 4 is programmed by means of a PC (Personal Computer) 5 provided with suitable software. The PC 5 constitutes the interface point with the operator and there are constructed thereupon all the real-time management rules of the irrigation system (description of the hydraulic and electric networks, irrigation programs, management methods of the sensors and field alarms, hydraulic and horticultural field parameters) and the reports returned from the field are read (irrigating activities report, alarms list, water consumption). Furthermore, the PC 5 performs manual and diagnostic tasks on the system. The PC 5 is connected to the field control unit 4 by means of an RS232 serial line, so it is not connected to the network but is connected point-to-point in a dedicated manner.

The field control unit 4 is an autonomous unit, i.e. it is able to manage the irrigation activity of the field 2 even after the PC has been switched off, with which it furthermore communicates periodically at the request of the user. From the PC 5 it receives all the management rules and returns the aforesaid reports thereto. The field control unit 4 interfaces with the local computer network 3 of the building and dialogues by means of a dedicated proprietary protocol (here called EPRAS) based on the same standard TCP/IP as the network 3. The field control unit 4 occupies a static IP address of the local network 3.

For each sector of the irrigable field 2 there is provided as a data transmission support a respective field bus 6 of RS485 serial type that operates with a standard field protocol (for example of the ModBus type) to send the irrigation commands issued by the field control unit 4 to a control unit 7 by means of an adaptor 8. The control unit 7 controls a plurality of solenoid valves 9 of the irrigation system. The adaptor 8 acts as an interface between the bus 6 and the control unit 7 by decoding the ModBus commands and transforming them into electric actions performed by the control unit 7 on the electric valves 9 to switch the aforesaid solenoid valves on and off. The adaptor 8 is also able to read a water counter 10 (for example of volumetric type) and communicate consumption data to the field control unit 4, as well as to record and transmit the data of appropriate sensors 11. For the sake of simplicity in the drawing, the solenoid valves 9, the counter 10 and the sensors 11 are shown only in relation to one of the adaptor-control units illustrated in the drawing.

Each field bus 6 is interfaced with the local network 3 by means of a bridge unit 12 that acts as a TCP/IP - ModBus protocol translator and vice versa to enable the field control unit 4 to send commands to the control units 7 and receive the corresponding replies, including the chronological indication of the activities, consumption and any alarms. Each bridge unit 12 occupies a static IP address of the local network 3.

Lastly, a router 13 may be provided for an Internet connection (represented schematically and indicated by 14) of the field control unit 4, which may constitute a small Web server.

## Claims

1. Centralised irrigation automation system for an irrigable field (2) of a building (1) provided with a local computer network (3) with a standard TCP/IP network protocol, comprising a field control unit (4) for receiving, storing and issuing irrigation commands according to preset programs that is inserted into the building and interfaced with the local computer network (3) of the building in such a way as to communicate therewith by means of a dedicated EPRAS protocol based on said standard TCP/IP network protocol and, for each irrigable field sector, a respective field bus (6) that acts as a transmission support with standard field protocol (ModBus) for communicating said irrigation commands to a respective control unit (7) for solenoid valves (9) and a respective protocol translation bridge unit (12) for interfacing said field bus (6) with said local computer network (3), said field control unit (4) being connected through a serial line to a personal computer (5) intended for the construction of irrigation management rules and sending them to said field control unit (4) and being an autonomous unit able to manage the irrigation activity of the field (2) even after the personal computer (5) has been switched off.

2. Centralised system according to claim 1, **characterised in that** it comprises an adaptor (8) interposed between said field bus (6) and said control unit (7) for decoding said irrigation commands transmitted with a standard MODBUS field protocol and transforming them into electric actions for the control unit (7).

3. Centralised system according to claim 2, **characterised in that** said adaptor (8) is able to read a water counter (10) and transmit the corresponding readings to said field control unit (4) by means of said field bus (6) and said bridge unit (12).

4. Centralised system according to claim 2 or 3, **characterised in that** said adaptor (8) is able to receive the sensor data (11) and transmit them to said field control unit (4) by means of said field bus (6) and said bridge unit (12).

5. Centralised system according to any preceding claim, **characterised in that** the system comprises a router (13) for connecting said autonomous field control unit (4) to Internet through said local computer network (3).

## Patentansprüche

1. Zentralisiertes, automatisiertes Bewässerungssystem für ein bewässerbares Feld (2) eines Gebäudes (1), das mit einem lokalen Computernetzwerk (3) mit einem Standard TCP/IP Netzwerkprotokoll versehen ist, umfassend eine Feldkontrolleinheit (4), um Bewässerungskommandos entsprechend einem voreingestellten Programm, das im Gebäude implementiert ist und mit dem lokalen Computernetzwerk (3) über ein Interface verbunden ist, zu empfangen, zu speichern und abzugeben auf eine solche Weise, dass es mittels eines bestimmten EPRAS Protokolls, basierend auf dem Standard TCP/IP Netzwerkprotokoll, kommuniziert und mit, für jeden bewässerbaren Feldsektor, einem entsprechenden Feldbus (6), der als Transmissionsunterstützung mit einem Standardfeldprotokoll (ModBus) die genannten Bewässerungskommandos zu einer entsprechenden Kontrolleinheit (7) für Magnetventile (9) überträgt und mit einer entsprechenden Brückeneinheit (12) zur Übersetzung des Protokolls, die mit dem Feldbus (6) über ein Interface mit dem lokalen Computernetzwerk (3) kommuniziert, wobei die Feldkontrolleinheit (4) über eine serielle Leitung mit einem Personal Computer (5) verbindet ist, der dazu vorgesehen ist die Regeln des Managements der Bewässerung herzustellen und sie zu der Feldkontrolleinheit (4) zu senden, die eine autonome Einheit ist, die in der Lage ist, die Bewässerungsaktivität des Feldes (2) zu steuern, auch wenn der Personal Computer (5) abgeschaltet ist.

2. Zentralisiertes System nach Anspruch 1, **dadurch gekennzeichnet, dass** es einen Adapter (8) aufweist, der zwischen dem Feldbus (6) und der Kontrolleinheit (7) vorgesehen ist, um die Bewässerungskommandos, die über ein Standard ModBus Feldprotokoll übermittelt werden, zu decodieren und um sie in elektrische Größen für die Kontrolleinheit (7) zu transformieren.

3. Zentralisiertes System nach Anspruch 2, **dadurch gekennzeichnet, dass** der Adapter (8) in der Lage ist, einen Wassermesser (10) abzulesen und die entsprechenden Ablesungen der Feldkontrolleinheit (4) mittels des Feldbuses (6) und der Brückeneinheit (12) zu übermitteln.

4. Zentralisiertes System nach Anspruch 2 oder 3, **dadurch gekennzeichnet, dass** der Adapter (8) in der Lage ist, die Daten der Sensoren (11) zu empfangen und sie der Feldkontrolleinheit (4) mittels des Feldbuses (6) und der Brückeneinheit (12) zu übermitteln.

5. Zentralisiertes System nach einem der voranstehenden Ansprüche, **dadurch gekennzeichnet, dass** das System einen Router (13) aufweist, um die autonome Feldkontrolleinheit (4) durch das lokale Computernetzwerk (3) mit dem Internet zu verbinden.

## Revendications

1. Système d'automatisation d'irrigation centralisé pour un champ irrigable (2) d'un bâtiment (1) pourvu d'un réseau informatique local (3) avec un protocole de réseau TCP/IP standard, comprenant une unité de contrôle de champ (4) pour recevoir, stocker et émettre des commandes d'irrigation selon des programmes prédéfinis qui est insérée dans le bâtiment et interfacée avec le réseau informatique local (3) du bâtiment de façon à communiquer avec celui-ci au moyen d'un protocole EPRAS dédié sur la base dudit protocole de réseau TCP/IP standard et, pour chaque secteur de champ irrigable, un bus de champ respectif (6) qui agit comme un support de transmission avec un protocole de champ standard (ModBus) pour communiquer lesdites commandes d'irrigation à une unité de contrôle respective (7) pour des électrovannes (9) et une unité de pont de traduction de protocole respective (12) pour interfacer ledit bus de champ (6) avec ledit réseau informatique local (3), ladite unité de contrôle de champ (4) étant connectée par l'intermédiaire d'une ligne série à un ordinateur personnel (5) destiné à la construction de règles de gestion d'irrigation et les envoyant à ladite unité de contrôle de champ (4) et étant une unité autonome capable de gérer l'activité d'irrigation du champ (2) même après que l'ordinateur personnel (5) a été mis hors tension.

2. Système centralisé selon la revendication 1, **caractérisé en ce qu'**il comprend un adaptateur (8) intercalé entre ledit champ de bus (6) et ladite unité de contrôle (7) pour décoder lesdites commandes d'irrigation transmises avec un protocole de champ ModBus standard et les transformer en actions électriques pour l'unité de contrôle (7).

3. Système centralisé selon la revendication 2, **caractérisé en ce que** ledit adaptateur (8) est capable de lire un compteur d'eau (10) et de transmettre les données correspondantes à ladite unité de contrôle de champ (4) au moyen dudit bus de champ (6) et de ladite unité de pont (12).

4. Système centralisé selon la revendication 2 ou 3, **caractérisé en ce que** ledit adaptateur (8) est capable de recevoir les données de capteur (11) et de les transmettre à ladite unité de contrôle de champ (4) au moyen dudit bus de champ (6) et de ladite unité de pont (12).

5. Système centralisé selon l'une quelconque des revendications précédentes, **caractérisé en ce que** le système comprend un routeur (13) pour connecter ladite unité de contrôle de champ autonome (4) à Internet par l'intermédiaire dudit réseau informatique local (3).
